# EUROPEAN PATENT APPLICATION

(11) **EP 4 622 264 A1**
(43) Date of publication of application: **24.09.2025**
(21) Application number: 25159624.3
(22) Date of filing: 24.02.2025
(51) Int. Cl.: H04N 19/433, H04N 19/593

(54) **VIDEO SIGNAL PROCESSING DEVICE AND VIDEO SIGNAL PROCESSING METHOD**

(30) Priority: 19.03.2024 KR 20240038079
(71) Applicant: Samsung Electronics Co., Ltd., Suwon-si, Gyeonggi-do 16677 (KR)
(72) Inventor: LEE, Miyeon, 16677 Suwon-si, Gyeonggi-do (KR)
(74) Representative: Kuhnen & Wacker Patent- und Rechtsanwaltsbüro PartG mbB

(57) **Abstract**

A video signal processing device and a video signal processing method of a video signal processing device are provided. The video signal processing method comprises: decoding (S110) a first coding unit of a bitstream in which a video sequence is encoded and generating decoded pixels; generating (S120) at least a part of a current picture frame using the decoded pixels; and storing (S130) the current picture frame in a current picture buffer memory that includes a plurality of memory devices, wherein storing the current picture frame in the current picture buffer memory includes alternately storing the decoded pixels for every certain number of pixels along a row and a column of the current picture frame in different memory devices of the plurality of memory devices as a part of the current picture frame.

## Description

### TECHNICAL FIELD

Embodiments of the present disclosure described herein are directed to a video signal processing method that encodes or decodes video signals and a video signal processing device that uses the same.

### DISCUSSION OF THE RELATED ART

A video signal processing device performs encoding and decoding of an image. A video signal processing device divides the image into blocks and predictively encodes and decodes each block through inter prediction or intra prediction. For intra prediction, strings are selectively predictively encoded and decoded.

A video signal processing device compresses images by removing temporal redundancy between the images using inter prediction and compresses images by removing spatial redundancy within the images using intra prediction.

### SUMMARY

Embodiments of the present disclosure provide a decoding method with increased speed and a video signal processing device that performs the decoding method with increased speed.

Embodiments of the present disclosure provide a method of encoding a video signal that enables a faster decoding speed and a video signal processing device that encodes the video signal.

According to an embodiment, a video signal processing method of a video signal processing device includes decoding a first coding unit of a bitstream in which a video sequence is encoded and generating decoded pixels, generating at least a part of a current picture frame using the decoded pixels, and storing the current picture frame in a current picture buffer memory that includes a plurality of memory devices. Storing the current picture frame in the current picture buffer memory includes alternately storing the decoded pixels for every certain number of pixels along a row and a column of the current picture frame in different memory devices of the plurality of memory devices.

According to an embodiment, a video encoding method of an encoding device includes encoding a video sequence that corresponds to a coding unit of a picture into a sub-string based on an intra string copy mode, generating at least one syntax element that corresponds to the sub-string, generating video sequence data based on the sub-string and the at least one syntax element, and generating a bitstream that includes the video sequence data and a sequence parameter. The video sequence data includes sub-string mode information that is a syntax element that corresponds to a type of the sub-string.

According to an embodiment, a video signal processing device includes a bitstream processing logic that decodes a bitstream in which video data is encoded and generates a residual data, a reconstructor that generates pixel data reconstructed based on the residual data and intra prediction data, an intra predictor that generates the intra prediction data based on a current picture frame, and a memory controller that stores the current picture frame in a current picture buffer memory that includes a plurality of memory devices based on the reconstructed pixel data. The memory controller alternately stores decoded pixels for every certain number of pixels along a row and a column of the current picture frame in different memory devices of the plurality of memory devices as a part of the current picture frame.

According to the above, a video signal is quickly decoded using a video signal processing method and a video signal processing device according to embodiments of the disclosure.

### BRIEF DESCRIPTION OF THE FIGURES

FIG. 1 is a block diagram of a video signal processing device according to an embodiment of the present disclosure.
FIG. 2 is a block diagram of a decoding device according to an embodiment of the present disclosure.
FIG. 3 illustrates intra block copy (IBC) prediction of a decoding device according to an embodiment of the present disclosure.
FIG. 4 illustrates intra string copy (ISC) prediction of a decoding device according to an embodiment of the present disclosure.
FIG. 5 illustrates a method of storing a current picture frame according to a comparative example.
FIG. 6 illustrates a method of storing a current picture frame according to an embodiment of the present disclosure.
FIG. 7 illustrates a method of storing a current picture frame according to an embodiment of the present disclosure.
FIG. 8 illustrates a method of reading an IBC reference block from a current picture frame according to a comparative example.
FIG. 9 illustrates a method of reading an IBC reference block from a current picture frame according to an embodiment of the present disclosure.
FIG. 10 illustrates a method of reading an IBC reference block from a current picture frame according to an embodiment of the present disclosure\.
FIG. 11 illustrates a method of reading an IBC reference block from a current picture frame according to a comparative example.
FIG. 12 illustrates a method of reading an IBC reference block from a current picture frame according to an embodiment of the present disclosure.
FIG. 13 illustrates a method of reading an IBC reference block from a current picture frame according to an embodiment of the present disclosure.
FIG. 14 illustrates a method of reading ISC reference pixels from a current picture frame according to a comparative example.
FIG. 15 illustrates a method of reading ISC reference pixels from a current picture frame according to an embodiment of the present disclosure.
FIG. 16 illustrates a method of reading ISC reference pixels from a current picture frame according to an embodiment of the present disclosure.
FIG. 17 illustrates a method of reading ISC reference pixels from a current picture frame according to a comparative example.
FIG. 18 illustrates a method of reading ISC reference pixels from a current picture frame according to an embodiment of the present disclosure.
FIG. 19 illustrates a method of reading ISC reference pixels from a current picture frame according to an embodiment of the present disclosure.
FIG. 20 shows an encoding device according to an embodiment of the present disclosure.
FIG. 21 is a block diagram of a string vector according to an embodiment of the present disclosure.
FIG. 22A is a block diagram of ISC encoding of a coding unit according to a comparative example.
FIG. 22B is a block diagram of ISC encoding of a coding unit according to an embodiment of the present disclosure.
FIG. 23 is a flowchart of a decoding method of a video signal processing device according to an embodiment of the present disclosure.
FIG. 24 is a flowchart of an encoding method of a video signal processing device according to an embodiment of the present disclosure.

### DETAILED DESCRIPTION

Below, embodiments of the present disclosure will be described in such detail and clearity that a person of ordinary skill in the art sill readily implement the disclosure.

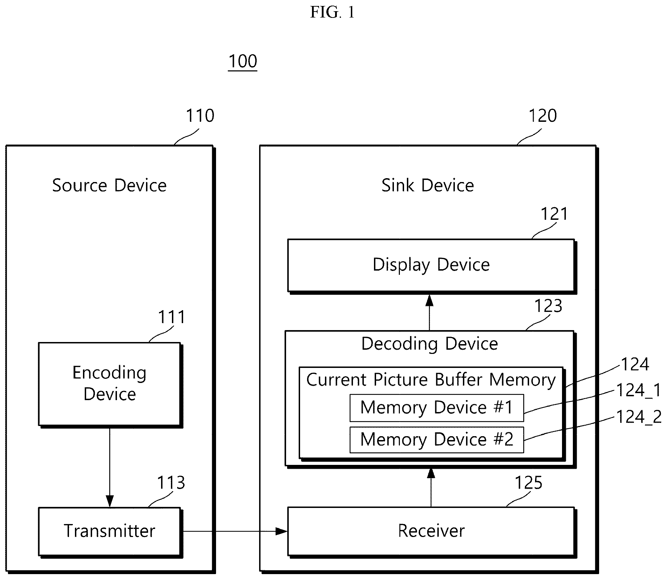

FIG. 1 is a block diagram of a video system 100 according to an embodiment of the present disclosure. A video signal processing device can be implemented by a video data encoding device 111, hereinafter referred to as an encoding device, of a source device 110 or a video data decoding device 123, hereinafter referred to as a decoding device, of a sink device 120.

Referring to FIG. 1, in an embodiment, the video system 100 includes the source device 110 and the sink device 120.

The source device 110 and the sink device 120 may be implemented with any of various types of electronic devices, such as a desktop computer, a tablet computer, a laptop computer, a smart phone, a wearable device, a digital camera, a display device, a workstation, a server, an electric vehicle, a home appliance, such as a television and a set-top box, a medical device, etc.

According to embodiments, the video system 100 further includes other general-purpose components in addition to the components illustrated in FIG. 1. In addition, according to embodiments, the source device 110 and the sink device 120 may further include other general-purpose components in addition to the components illustrated in FIG. 1. For example, the source device 110 and the sink device 120 may include a non-volatile memory, a user interface, a display panel, etc.

The encoding device 111 can receive a video sequence. For example, the encoding device 111 receives a video sequence from a video capture device such as a video camera or a video archive that stores previously captured videos. The video sequence is a series of video frames. The video sequence can be divided into large coding units (or coding tree units) for encoding, and each of the large coding units includes a plurality of coding units. The large coding units may have fixed or variable sizes and can have different sizes according to a particular encoding standard. For example, the size of the large coding unit may be 32×32 pixels, 64×64 pixels, or 128×128 pixels, but is not necessarily limited thereto. The coding units included in the large coding unit may have different sizes or be the same size. According to embodiments, the coding unit includes a luma coding unit and a chroma coding unit.

The encoding device 111 encodes the video sequence. The encoding device 111 outputs the encoded video sequence in the form of a bitstream. Frames of the encoded video sequence are output in the form of a bitstream.

According to an intra or inter prediction of the coding units, the encoding device 111 performs quantization operations and entropy coding operations that encode the video sequence. The encoding device 111 encodes the video sequence based on a video compression scheme such as one of Advanced Video Coding (AVC), VP8, VP9, High Efficiency Video Coding (HEVC), AOMedia Video 1 (AV1), or Audio Video Standard 3 (AVS3), etc.

A transmitter 113 transmits, to a receiver 125 of the sink device 120, the bitstream output from the encoding device 111 in the format of a file or streaming data. For example, the transmitter 113 transmits the bitstream output from the encoding device 111 to the receiver 125 through a network.

The network may be any wireless or wired communication medium, such as a radio frequency (RF) spectrum, one or more physical transmission lines, or any combination of wireless and wired media. The network may be a local area network, a wide-area network, or a global network such as the Internet.

The sink device 120 includes a display device 121, the decoding device 123, and the receiver 125. The sink device 120 processes and displays the bitstream received from the source device 110. Here, the term "displays" refers to outputting an audio signal based on processed audio data as well as displaying an image based on a processed video sequence. The sink device 120 may be implemented in various forms, such as a television, a monitor, a portable multimedia player, a mobile phone, a tablet, an electronic signage, etc. Although FIG. 1 shows that the encoding device 111 is included in the source device 110 and the decoding device 123 is included in the sink device 120, embodiments of the present disclosure are not necessarily limited thereto, and in other embodiments, the encoding device 111 and the decoding device 123 are included in the source device 110 and/or the sink device 120. In addition, the encoding device 111 and the decoding device 123 may form a codec.

The receiver 125 receives the bitstream that includes the encoded video sequence from the source device 110 through the network.

The decoding device 123 receives the bitstream from the receiver 125 and decodes the bitstream. The decoding device 123 receives the bitstream that includes the encoded video sequence that includes the large coding units that are each divided into the plural coding units. The decoding device 123 decodes the bitstream and generates prediction information that indicates a prediction mode of each of the plurality of coding units and sequence information that indicates a decoding sequence of each of the plurality of coding units.

The decoding device 123 performs, based on the prediction information, the inter or intra prediction on at least some of the coding units in the large coding unit. The decoding device 123 performs intra prediction on the coding units, which are encoded in an intra block mode, using an intra block copy (IBC) scheme. According to an embodiment, the decoding device 123 performs intra prediction on the coding units using an intra string copy (ISC) scheme.

The decoding device 123 includes a reference picture buffer memory that stores inter prediction data, which is a result of performing inter prediction on each of the coding units encoded in an inter mode. The decoding device 123 includes a current picture buffer memory 124 that stores intra prediction data, which is a result of performing intra prediction on each of the coding units encoded in an intra mode.

The decoding device 123 reconstructs the coding unit based on the inter prediction data stored in the reference picture buffer memory or reconstructs the coding unit based on the intra prediction data stored in the current picture buffer memory 124. The decoding device 123 generates reconstructed pixel data of the coding unit. The decoding device 123 filters the reconstructed pixel data and generates decoded pixel data.

The reference picture buffer memory stores at least one decoded frame before a current frame.

The decoding device 123 according to an embodiment of the present disclosure includes a plurality of memory devices that form the reference picture buffer memory. For example, the decoding device 123 includes two different memory devices that form the reference picture buffer memory, or includes four different memory devices that form the reference picture buffer memory. Similar to storing decoded pixels in the current picture buffer memory 124, which will be described below, the decoding device 123 alternately stores the pixels of the decoded video frame for every certain number of pixels in the reference picture buffer memory.

The decoding device 123 according to an embodiment of the present disclosure includes a plurality of memory devices that form the current picture buffer memory 124. For example, the decoding device 123 includes two different memory devices that form the current picture buffer memory 124, or includes four different memory devices that form the current picture buffer memory 124. In an embodiment, the number of the memory devices that form the current picture buffer memory 124 is 2n, where n is a positive number equal to or greater than 1. The current picture buffer memory 124 stores pixels decoded from a current picture frame. The current picture frame is a video frame currently being decoded in the bitstream, which includes a plurality of video frames.

The decoding device 123 stores some of the pixels decoded from the current picture frame in one memory device and stores other decoded pixels in another memory device. The pixels decoded from the current picture frame are alternately stored in different memory devices for every certain number of decoded pixels along a row and a column of the current picture frame. For example, referring to FIG. 1, the decoding device 123 alternately stores m pixels, where m is a positive number equal to or greater than 1, decoded from one row of the current picture frame into a first memory device 124_1 and a second memory device 124_2. In addition, the decoding device 123 alternately stores k pixels, where k is a positive number equal to or greater than 1, decoded from one column of the current picture frame into the first memory device 124_1 and the second memory device 124_2.

The decoding device 123 decodes the video sequence based on a video decoding scheme such as one of Advanced Video Coding (AVC), VP8, VP9, High Efficiency Video Coding (HEVC), AOMedia Video 1 (AV1), or Audio Video Standard 3 (AVS3), etc.

Each of the encoding device 111 and the decoding device 123 can be implemented as a microprocessor, a digital signal processor (DSP), an application-specific integrated circuit (ASIC), a field-programmable gate array (FPGA), software, hardware, firmware, or any combination thereof. Each of the encoding device 111 and the decoding device 123 can be implemented as a component of a system-on-chip (SOC). For example, a system-on-chip (SOC) includes an image processing block, a communication block, an audio processing block, a buffer memory, a core processor, and a power management circuit in addition to the encoding device 111 and the decoding device 123.

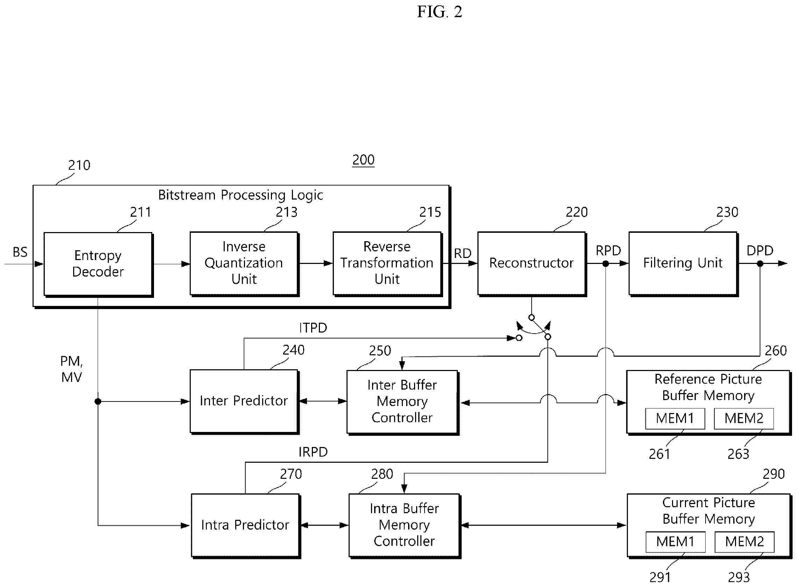

FIG. 2 is a block diagram of a decoding device 200 according to an embodiment of the present disclosure. The decoding device 200 described with reference to FIG. 2 corresponds to the video data decoding device 123 of the sink device 120 of FIG. 1.

Referring to FIG. 2, in an embodiment, the decoding device 200 includes a bitstream processing logic 210, a reconstructor 220, a filtering unit 230, an inter predictor 240, an inter buffer memory controller 250, a reference picture buffer memory 260, an intra predictor 270, an intra buffer memory controller 280, and a current picture buffer memory 290. According to embodiments, the decoding device 200 further includes other general-purpose components in addition to the components illustrated in FIG. 2. In FIG. 2, the decoding device 200 is described assuming that the inter buffer memory controller 250 and the intra buffer memory controller 280 are implemented separately, however, according to embodiments, the inter buffer memory controller 250 and the intra buffer memory controller 280 are implemented as a single component. Detailed descriptions of the components that are the same as or similar to those of FIG. 1 may be omitted or summarized. According to embodiments, some or all of the components shown in FIG. 2 can be implemented as one piece of hardware.

The bitstream processing logic 210 includes an entropy decoder 211, an inverse quantization unit 213, and a reverse transformation unit 215.

The entropy decoder 211 receives a bitstream BS and parses the bitstream BS to derive information for decoding the bitstream BS. The entropy decoder 211 decodes information in the bitstream BS based on a coding methodology such as an Exp-Golomb coding, a context-based adaptive variable length coding (CAVLC), or a context-based adaptive binary arithmetic coding (CABAC).

The entropy decoder 211 decodes the bitstream BS and generates filtering information, quantized transform coefficients, and parameter information. The parameter information includes information about various parameter sets, such as an adaptation parameter set (APS), a picture parameter set (PPS), a sequence parameter set (SPS), or a video parameter set (VPS). The entropy decoder 211 outputs a value of a syntax element for reconstructing a picture and a value of the quantized transform coefficients related to residuals. The entropy decoder 211 provides the quantized transform coefficients and the parameter information to the inverse quantization unit 213.

The inverse quantization unit 213 inversely quantizes the quantized transform coefficients and outputs transform coefficients.

The reverse transformation unit 215 reversely transforms the transform coefficients received from the inverse quantization unit 213 and generates residual data RD.

The reconstructor 220 restores the current coding unit and generates reconstructed pixel data RPD. The reconstructed pixel data RPD is generated in units of the coding block of the coding unit. The reconstructor 220 reconstructs the coding unit based on inter prediction data ITPD received from the inter predictor 240 or based on intra prediction data IRPD received from the intra predictor 270. The reconstruction of the coding unit means the restoration of the coding unit.

The filtering unit 230 improves image quality of the reconstructed pixel data RPD by filtering the reconstructed pixel data RPD and generating decoded pixel data DPD. The filtering unit 230 applies at least one of deblocking filtering, sample adaptive offset, adaptive loop filter, bilateral filter, etc., to the reconstructed pixel data RPD, but is not necessarily limited thereto.

The entropy decoder 211 decodes the bitstream BS and provides prediction mode information PM that indicates a prediction mode of the coding unit and motion vector information MV of the coding unit to the inter predictor 240 or the intra predictor 270. The prediction mode information PM indicates whether the coding unit is encoded in the inter prediction mode or in the intra prediction mode. The prediction mode information PM also indicates an intra block copy (IBC) mode or an intra string copy (ISC) mode of the intra prediction mode.

The inter predictor 240 performs inter prediction on the coding unit that is encoded into the inter prediction mode based on a reference picture frame stored in the reference picture buffer memory 260 and generates inter prediction data ITPD. The intra predictor 270 performs intra prediction on the coding unit that is encoded into the intra block copy mode or the intra string copy mode based on the current picture frame stored in the current picture buffer memory 290. The intra predictor 270 generates the intra prediction data IRPD as a result of performing intra prediction on the coding unit.

The inter buffer memory controller 250 stores the decoded pixel data DPD in the reference picture buffer memory 260 as part of the reference picture frame. The intra buffer memory controller 280 stores the reconstructed pixel data RPD in the current picture buffer memory 290 as part of the current picture frame. The reference picture buffer memory 260 includes memory devices 261 and 263, and the current picture buffer memory 290 includes memory devices 291 and 293. According to embodiments, the decoded pixel data DPD are stored in the current picture buffer memory 290 as part of the current picture frame, or the reconstructed pixel data RPD are stored in the reference picture buffer memory 260 as part of the reference picture frame. A method of storing the decoded pixel data DPD in the reference picture buffer memory 260 by using the inter buffer memory controller 250 is substantially the same as or similar to a method of storing the reconstructed pixel data RPD in the current picture buffer memory 290 as part of the current picture frame by using the intra buffer memory controller 280. Hereinafter, the intra buffer memory controller 280 and the current picture buffer memory 290 are described in detail as a representative example.

The intra buffer memory controller 280 stores the reconstructed pixel data RPD in the current picture buffer memory 290 as part of the current picture frame. The current picture buffer memory 290 includes the memory devices 291 and 293. The intra buffer memory controller 280 alternately stores the reconstructed pixel data RPD in the memory devices 291 and 293 for every certain number of pixels in the current picture frame. For example, the intra buffer memory controller 280 stores m reconstructed pixel data RPD, where m is a positive number equal to or greater than 1, and which correspond to the pixels decoded from one row of the current picture frame, alternately in the first memory device 291 and the second memory device 293. In addition, the intra buffer memory controller 280 stores k reconstructed pixel data RPD, where k is a positive number equal to or greater than 1, and which correspond to the pixels decoded from one column of the current picture frame, alternately in the first memory device 291 and the second memory device 293.

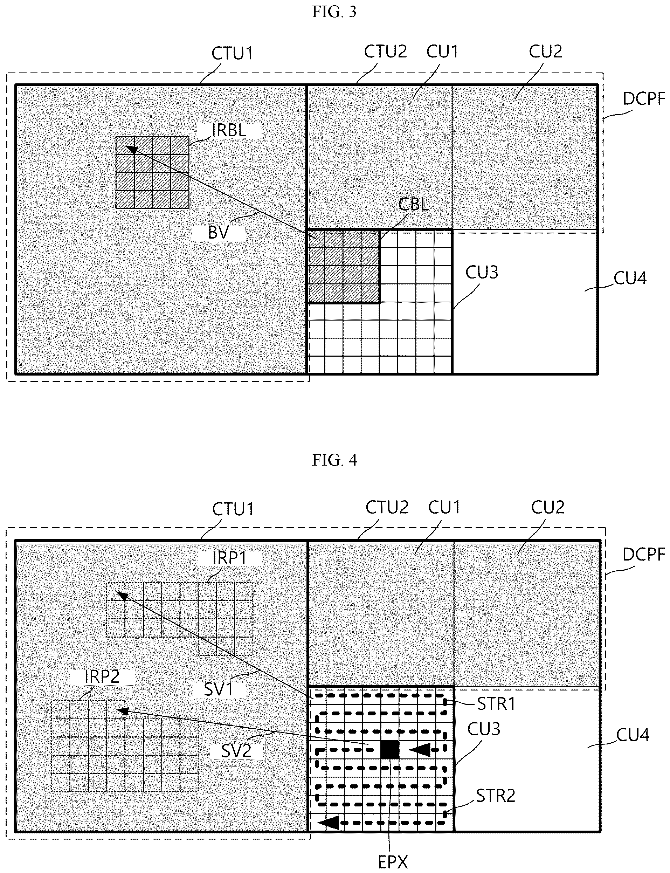

FIG. 3 illustrates intra block copy (IBC) prediction of a decoding device according to an embodiment of the present disclosure. IBC prediction is performed by the decoding device 200 of FIG. 2. Hereinafter, an operation of the decoding device 200 that performs the IBC prediction will be described with reference to FIGS. 2 and 3.

Referring to FIG. 3, in an embodiment, the pixels decoded in the current picture frame, which is a video frame of a set of consecutive video frames that are currently being decoded, constitute a decoded current picture frame DCPF. For example, a first coding tree unit CTU1 of the current picture frame and first and second coding units CU1 and CU2 of a second coding tree unit CTU2 have been decoded to constitute the decoded current picture frame DCPF. FIG. 3 shows that a third coding unit CU3 of the second coding tree unit CTU2 is currently being decoded and a fourth coding unit CU4 is not decoded.

The decoding device 200 generates a prediction block with reference to an IBC reference block IRBL indicated by a block vector BV of a coding block CBL that is currently being decoded in the decoded current picture frame DCPF. Different from referring to a previous picture frame in an inter-picture motion compensation, the decoding device 200 refers to the decoded current picture frame DCPF of the current picture frames.

The decoding device 200 according to an embodiment of the present disclosure stores the decoded pixels of the coding block CBL currently being decoded in the current picture buffer memory 290 of FIG. 2. The decoding device 200 stores each of the decoded pixels of the coding block CBL currently being decoded in the current picture buffer memory 290 along the row and/or the column that correspond to the pixel in the current picture frame. The decoding device 200 stores the decoded pixels for every certain number of pixels along the row and/or the column alternately in the first memory device 291 and the second memory device 293 of the current picture buffer memory 290.

FIG. 4 illustrates an intra string copy (ISC) prediction of a decoding device according to an embodiment of the present disclosure. ISC prediction is performed by the decoding device 200 of FIG. 2. Hereinafter, an operation of the decoding device 200 that performs IBC prediction will be described with reference to FIGS. 2 and 4.

Referring to FIG. 4, in an embodiment, the pixels decoded in the current picture frame, which is a video frame of a set of the consecutive video frames that are currently being decoded, constitute the decoded current picture frame DCPF. For example, the first coding tree unit CTU1 of the current picture frame and the first and second coding units CU1 and CU2 of the second coding tree unit CTU2 have been decoded and constitute the decoded current picture frame DCPF. FIG. 4 shows that the third coding unit CU3 of the second coding tree unit CTU2 is currently being decoded and the fourth coding unit CU4 is not decoded.

A coding unit encoded in an ISC method (encoded in ISC mode) includes at least one sub-string. FIG. 4 shows a structure in which the third coding unit CU3 includes a first sub-string STR1, an escape pixel EPX, and a second sub-string STR2. The escape pixel EPX is a pixel for which no reference pixel exists. For example, the escape pixel EPX refers to a case where no matching reference pixel is found for a sample in the current coding unit in the decoded current picture frame DCPF, which is a reference area. The escape pixel EPX is separately included in the bitstream, and a value of the escape pixel EPX is coded directly in the bitstream.

The sub-string includes information about a two-dimensional string vector and information about a length of the sub-string. The two-dimensional string vector indicates an offset of the ISC reference pixels that correspond to the sub-string with a starting pixel in the decoded current picture frame DCPF. The length of the sub-string is the number of pixels of the sub-string and is the number of pixels of the string along the row of the coding unit. According to an embodiment, the length of the sub-string is the number of pixels of the string in a raster scan direction along the row of the coding unit. FIG. 4 is described assuming that the sub-string extends along the row of the coding unit. For example, the sub-string is arranged in a zig-zag manner that extends from the last pixel or the first pixel of one row of the coding unit to the next lower row.

The decoding device 200 generates a prediction pixel by referring to ISC reference pixels IRP1 and IRP2 respectively indicated by string vectors SV1 and SV2 of the coding unit CU3 currently being decoded in the decoded current picture frame DCPF.

The decoding device 200 according to an embodiment of the present disclosure stores the decoded pixels of the sub-string of the coding unit CU3 currently being decoded in the current picture buffer memory 290 of FIG. 2. The decoding device 200 stores each of the decoded pixels of the coding unit CU3 currently being decoded in the current picture buffer memory 290 along the row and/or the column that corresponds to the pixel in the current picture frame. The decoding device 200 stores the decoded pixels for every certain number of pixels along the row and/or the column alternately in the first memory device 291 and the second memory device 293 of the current picture buffer memory 290.

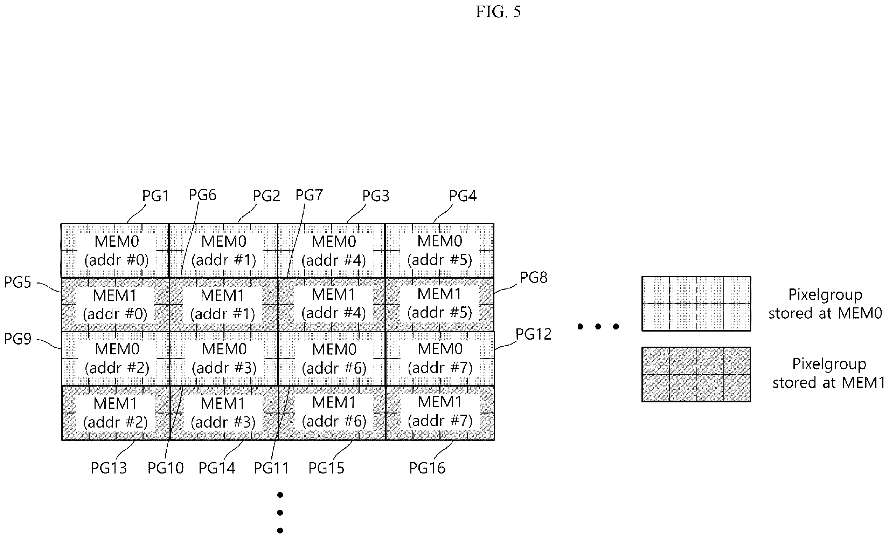

FIG. 5 illustrates a method of storing a current picture frame according to a comparative example.

Referring to FIG. 5, a decoding device according to a comparative example alternately stores decoded pixels in a plurality of memory devices MEM0 and MEM1 along a corresponding row of the current picture frame. The decoded pixels stored in the memory devices MEM0 and MEM1 constitute a decoded current picture frame.

In FIG. 5, pixels hatched with dots are stored in a first memory device MEM0, and pixels hatched with oblique lines are stored in a second memory device MEM1. The decoding device according to a comparative example of FIG. 5 will be described assuming that values of 8 pixels are stored in addresses of each of the memory devices MEM0 and MEM1. The pixels stored in the addresses of each of the memory devices MEM0 and MEM1 may be referred to as a pixel group. For example, pixels in a plurality of pixel groups PG1 to PG16 of decoded pixels in a coding unit are stored in the memory devices MEM0 and MEM1.

The decoding device according to a comparative example stores the pixels of the pixel groups PG1 to PG16 alternately in the memory devices MEM0 and MEM1 for each row of the current picture frame. For example, the decoding device according to a comparative example stores the pixel groups PG1 to PG4 that correspond to a first row and a second row of the current picture frame in the first memory device MEM0. The pixel groups PG1 to PG4 are stored in addresses addr #0, addr #1, addr #4, and addr #5 of the first memory device MEM0. Similarly, the pixel groups PG5 to PG8 that correspond to a third row and a fourth row are stored in addresses addr #0, addr #1, addr #4, and addr #5 of the second memory device MEM1. Similarly, of the pixel groups PG9 to PG16, the pixel groups PG9 to G12 are stored in the first memory device MEM0, and the pixel groups PG13 to PG16 are stored in the second memory device MEM1.

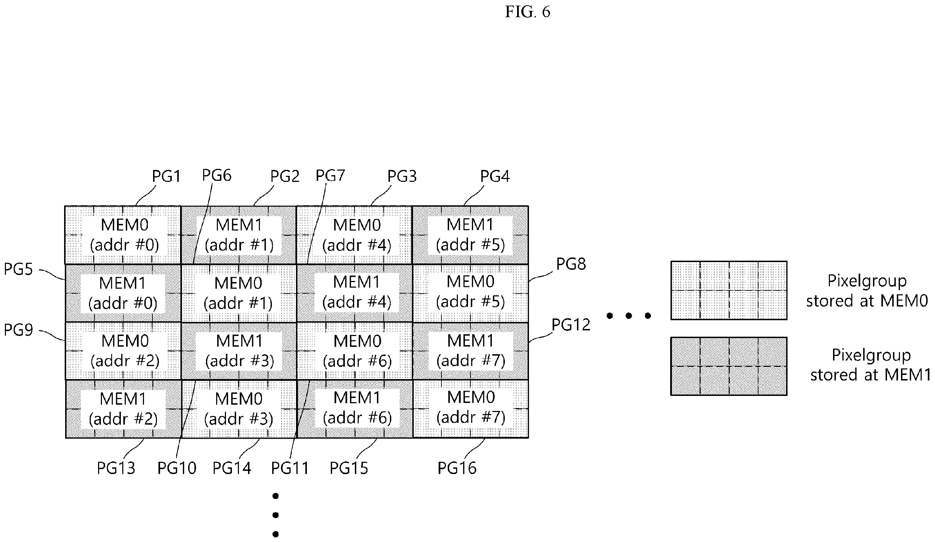

FIG. 6 illustrates a method of storing a current picture frame according to an embodiment of the present disclosure. The storing of the current picture frame described with reference to FIG. 6 is performed by the decoding device 200 of FIG. 2. An operation of the decoding device 200 that stores the current picture frame is described with reference to FIGS. 2 and 6. The storing of the current picture frame can be performed based on an ISC prediction or an IBC prediction of the decoding device 200. The storing of the current picture frame can be performed by the intra buffer memory controller 280. In FIG. 6, the storing of the current picture frame is described as a representative example, however, the reference picture frame can also be stored by the inter buffer memory controller 250 in a similar manner.

Referring to FIG. 6, in an embodiment, the decoding device 200 stores the decoded pixels for every certain number of pixels alternately in memory devices MEM0 and MEM1 along corresponding rows and/or columns of the current picture frame. The decoded pixels stored in the memory devices MEM0 and MEM1 constitute a decoded current picture frame.

According to an embodiment, the memory devices MEM0 and MEM1 are on-chip memory devices. For example, when the decoding device 200 is a part of a system-on-chip implemented in one package, the memory devices MEM0 and MEM1 are SRAMs (static random access memory) inside the system-on-chip. According to an embodiment, the memory devices MEM0 and MEM1 are flip-flop arrays inside the system-on-chip.

According to an embodiment, the memory devices MEM0 and MEM1 are off-chip memory devices. For example, when the decoding device 200 is a part of a system-on-chip implemented in one package, the memory devices MEM0 and MEM1 are DRAMs (dynamic random access memory) outside the system-on-chip.

In FIG. 6, pixels hatched with dots are stored in a first memory device MEM0, and pixels hatched with oblique lines are stored in a second memory device MEM1. The decoding device of FIG. 6 will be described assuming that values of 8 pixels are stored in addresses of each of the memory devices MEM0 and MEM1. The pixels stored in the addresses of each of the memory devices MEM0 and MEM1 may be referred to as a pixel group. For example, pixels in a plurality of pixel groups PG1 to PG16 of the pixels decoded in the coding unit are stored in the memory devices MEM0 and MEM1.

The decoding device 200 according to an embodiment of the present disclosure stores the pixels of the pixel groups PG1 to PG16 for every certain number of pixels alternately in the memory devices MEM0 and MEM1 along the row and/or the column of the current picture frame. For example, the decoding device 200 stores the pixels alternately in each of the memory devices MEM0 and MEM1 for every four pixels along the row and for every two pixels along the column of the current picture frame. Accordingly, the decoding device 200 stores the pixel groups PG1 to PG4 that correspond to the first and second rows of the current picture frame alternately in the first memory device MEM0 and the second memory device MEM1 for every pixel group. The pixel groups PG5 to PG8 that correspond to third and fourth rows of the current picture frame are also stored in the first memory device MEM0 and the second memory device MEM1 in a similar manner. When the pixel groups PG1 to PG4 of the first rows are alternately stored in the memory devices MEM0 and MEM1 in the order of the first memory device MEM0 and the second memory device MEM1, the pixel groups PG5 to PG8 that correspond to the third and fourth rows are alternately stored in the memory devices MEM0 and MEM1 in the order of the second memory device MEM1 and the first memory device MEM0. Similar to the above, the decoding device 200 stores the other pixel groups PG9 to PG16 alternately in the first memory device MEM0 and the second memory device MEM1 for every pixel group.

The decoding device 200 alternately arranges the pixel groups PG1 to PG16 in the first memory device MEM0 and second memory device MEM1 in a checkerboard pattern. For example, when one pixel group A is stored in the first memory device MEM0, the decoding device 200 stores pixel groups arranged on top, bottom, left, and right sides adjacent to the pixel group A in the current picture frame in a memory device other than the first memory device MEM0. For example, the decoding device 200 stores the pixel groups arranged on the top, bottom, left, and right sides adjacent to the pixel group A in the second memory device MEM1.

According to an embodiment, the pixel groups PG1 to PG16 are stored at different addresses in the first memory device MEM0 and the second memory device MEM1.

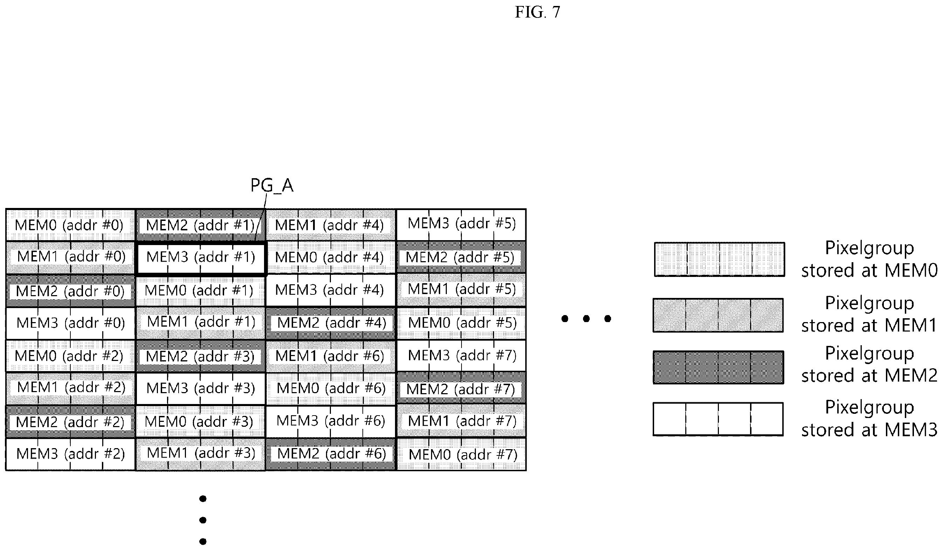

FIG. 7 illustrates a method of storing a current picture frame according to an embodiment of the present disclosure. The storing of the current picture frame described with reference to FIG. 7 is performed by the decoding device 200 of FIG. 2. An operation of the decoding device 200 that stores the current picture frame is described with reference to FIGS. 2 and 7. The storing of the current picture frame may be performed based on an ISC prediction or an IBC prediction of the decoding device 200. The storing of the current picture frame can be performed by the intra buffer memory controller 280. In FIG. 7, the storing of the current picture frame is described as a representative example, however, the reference picture frame may also be stored by the inter buffer memory controller 250 in a similar manner. Detailed description of the same or similar elements as those of FIG. 6 may be omitted or summarized.

Referring to FIG. 7, in an embodiment, the decoding device 200 stores the decoded pixels for every certain number of pixels alternately in memory devices MEM0, MEM1, MEM2, and MEM3 along corresponding rows and/or columns of the current picture frame. The decoded pixels stored in memory devices MEM0, MEM1, MEM2, and MEM3 constitute a decoded current picture frame. The decoded pixels stored for every certain number of pixels may be referred to as a pixel group.

According to embodiments, the memory devices MEM0, MEM1, MEM2, and MEM3 may be on-chip memory devices or off-chip memory devices.

In FIG. 7, pixels hatched with dots are stored in a first memory device MEM0, and pixels hatched with oblique lines are stored in a second memory device MEM1. Pixels hatched with dots in a dark background are stored in a third memory device MEM2, and pixels displayed as blank are stored in a fourth memory device MEM3. The decoding device of FIG. 7 will be described assuming that values of 4 pixels are stored in addresses of each of the memory devices MEM0, MEM1, MEM2, and MEM3.

The decoding device 200 according to an embodiment of the present disclosure stores the pixels decoded from the coding unit for every certain number of pixels alternately in the memory devices MEM0, MEM1, MEM2, and MEM3 along the rows and/or the columns of the current picture frame. For example, the decoding device 200 stores the pixels for every four pixels along the row and for every one pixel along the column of the current picture frame alternately in each of the memory devices MEM0, MEM1, MEM2, and MEM3. Accordingly, the decoding device 200 stores every four pixels of the decoded pixels of the first current picture frame alternately in the first memory device MEM0, the second memory device MEM1, the third memory device MEM2, and the fourth memory device MEM3. The decoded pixels of each of other rows are similarly stored for every four pixels alternately in the first memory device MEM0, the second memory device MEM1, the third memory device MEM2, and the fourth memory device MEM3. When the decoded pixels of the first row are alternately stored in the memory devices MEM0, MEM1, MEM2, and MEM3 in the order of the first, second, third, and fourth memory devices MEM0, MEM1, MEM2, and MEM3, the decoded pixels of each of the other rows are alternately stored in the first, second, third, and fourth memory devices MEM0, MEM1, MEM2, and MEM3 in a different order. For example, referring to FIG. 7, the decoded pixels of a second row are alternately stored in the memory devices MEM0, MEM1, MEM2, and MEM3 in the order of the second, fourth, first, and third memory devices MEM1, MEM3, MEM0, and MEM2. The decoded pixels of a third row are alternately stored in the memory devices MEM0, MEM1, MEM2, and MEM3 in the order of the third, first, fourth, and second memory devices MEM2, MEM0, MEM3, and MEM1. The decoded pixels of a fourth row are alternately stored in the memory devices MEM0, MEM1, MEM2, and MEM3 in the order of the fourth, second, third, and first memory devices MEM3, MEM1, MEM2, and MEM0.

The decoding device 200 alternately arranges the pixel groups PG1 to PG16 in the first memory device MEM0, the second memory device MEM1, the third memory device MEM2, and the fourth memory device MEM3 in a checkerboard pattern. For example, when one pixel group in the current picture frame is stored in the first memory device MEM0, the decoding device 200 stores pixel groups arranged on top, bottom, left, and right sides adjacent to the one pixel group in memory devices other than the first memory device MEM0. For example, referring to FIG. 7, of the pixel groups arranged adj acent to a pixel group PG_A stored at address #1 of the fourth memory device MEM3, the pixel group adjacent to the top side of the pixel group PG_A is stored at address #1 of the third memory device MEM2, the pixel group adjacent to the bottom side of the pixel group PG_A is stored at address #1 of the first memory device MEM0, the pixel group adjacent to the left side of the pixel group PG_A is stored at address #0 of the second memory device MEM1, and the pixel group adjacent to the right side of the pixel group PG_A is stored at address #4 of the first memory device MEM0.

According to an embodiment, the pixel groups PG1 to PG16 are stored at different addresses in the first memory device MEM0, the second memory device MEM1, the third memory device MEM2, and the fourth memory device MEM3.

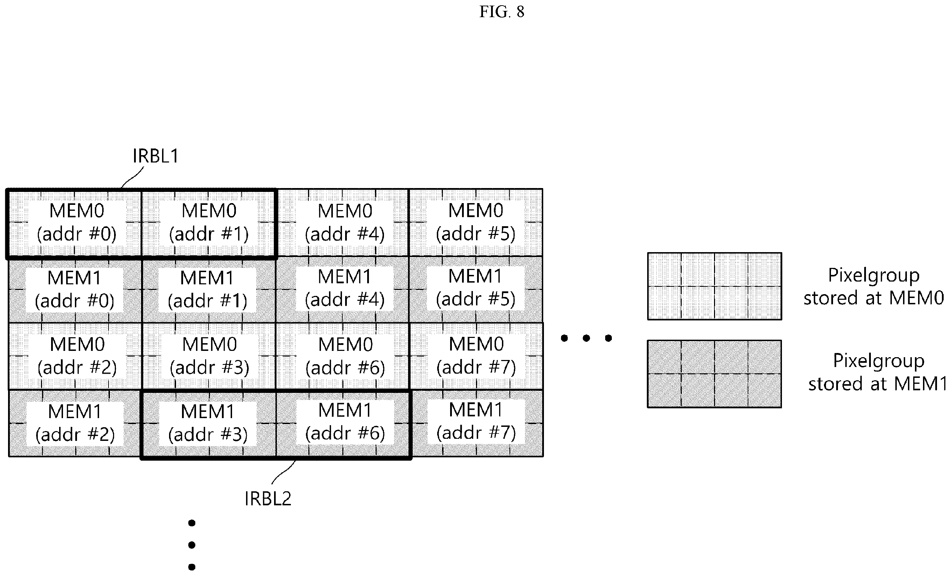

FIG. 8 illustrates a method of reading an IBC reference block from a current picture frame according to a comparative example. FIG. 8 illustrates the reading of the IBC reference block with a pixel size of 8 by 2 (8×2).

The reading of the IBC reference block in the current picture frame described with reference to FIG. 8 is performed based on the current picture frame stored as in FIG. 5 by a decoding device according to a comparative example.

Referring to FIG. 8, the decoding device according to a comparative example generates prediction blocks that respectively correspond to coding blocks by referring to the IBC reference blocks IRBL1 and IRBL2 indicated by block vectors of the coding blocks currently being decoded in the decoded current picture frame. For example, a block vector of one coding block of the coding unit indicates a first IBC reference block IRBL1, and a block vector of another coding block of the coding unit indicates a second IBC reference block IRBL2.

The decoding device according to a comparative example reads the IBC reference blocks IRBL1 and IRBL2 from memory devices, respectively, and generates the prediction blocks. Since each of the IBC reference blocks IRBL1 and IRBL2 has a pixel size of 8 by 2, each of the IBC reference blocks IRBL1 and IRBL2 are stored at different addresses of one memory device. For example, the first IBC reference block IRBL1 is stored at two addresses addr #0 and addr #1 of the first memory device MEM0, and the second IBC reference block IRBL2 is stored at two addresses addr #3 and addr #6 of the second memory device MEM1. Accordingly, the decoding device according to a comparative example is required to access one memory device twice to read the IBC reference blocks IRBL1 and IRBL2. For example, the decoding device according to a comparative example is required to access each of two addresses addr #0 and addr #1 of the first memory device MEM0 in two different clock periods of a clock signal to read the first IBC reference block IRBL1. In addition, the decoding device according to a comparative example is required to access each of two addresses addr #3 and addr #6 of the second memory device MEM1 in two different clock periods of a clock signal to read the second IBC reference block IRBL2. Therefore, as the pixel size of the IBC reference block increases, the number of memory device accesses increases, and as a result, the time required to decode the coding block also increases.

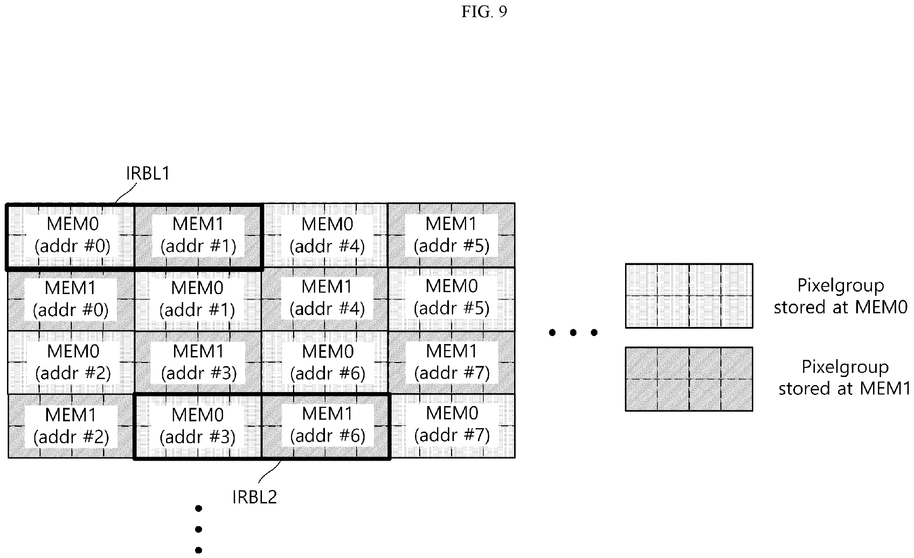

FIG. 9 illustrates a method of reading an IBC reference block from a current picture frame according to an embodiment of the present disclosure. FIG. 9 illustrates the reading of the IBC reference block with a pixel size of 8 by 2 (8×2).

The reading of the IBC reference block in a current picture frame described with reference to FIG. 9 is performed based on the current picture frame stored shown in FIG. 6 by the decoding device 200 of FIG. 2. An operation of the decoding device 200 that reads the IBC reference block from the current picture frame will be described with reference to FIGS. 2 and 9. Detailed descriptions that are the same as or similar to those of FIGS. 2 and 6 may be omitted or summarized.

Referring to FIG. 9, in an embodiment, the decoding device 200 generates prediction blocks that respectively correspond to coding blocks by referring to the IBC reference blocks IRBL1 and IRBL2 indicated by block vectors of the coding blocks currently being decoded in the decoded current picture frame. For example, a block vector of one coding block of the coding unit indicates a first IBC reference block IRBL1, and a block vector of another coding block of the coding unit indicates a second IBC reference block IRBL2.

The decoding device 200 reads the IBC reference blocks IRBL1 and IRBL2 from respective memory devices and generates the prediction blocks. Each of the IBC reference blocks IRBL1 and IRBL2 has a pixel size of 8 by 2, and as described with reference to FIG. 6, the current picture frame is stored alternately in the first memory device MEM0 and the second memory device MEM1 for every certain number of pixels along the row and/or the column of the current picture frame. Accordingly, different from a current picture frame of FIG. 5, each of the IBC reference blocks IRBL1 and IRBL2 in a current picture frame is stored at different memory devices according to an embodiment of the present disclosure. For example, the first IBC reference block IRBL1 is stored at address #0 (addr #0) of the first memory device MEM0 and address #1 (addr #1) of the second memory device MEM1. In addition, the second IBC reference block IRBL2 is stored at address #3 (addr #3) of the first memory device MEM0 and address #6 (addr #6) of the second memory device MEM1. For example, each of the first IBC reference block IRBL1 and the second IBC reference block IRBL2, which have a pixel size of 8 by 2, is stored separately in two memory devices MEM0 and MEM1. Accordingly, the decoding device 200 reads the IBC reference blocks IRBL1 and IRBL2 with a single access to each of the different memory devices MEM0 and MEM1. For example, the decoding device 200 reads the first IBC reference block IRBL1 by simultaneously accessing address #0 (addr #0) of the first memory device MEM0 and address #1 (addr #1) of the second memory device MEM1 in the same clock period of the clock signal. In addition, the decoding device 200 reads the second IBC reference block IRBL2 by simultaneously accessing address #3 (addr #3) of the first memory device MEM0 and address #6 (addr #6) of the second memory device MEM1 in the same clock period of the clock signal. Therefore, different from a decoding device of a comparative example described with reference to FIG. 8, the decoding device 200 according to an embodiment of the present disclosure reads the IBC reference blocks IRBL1 and IRBL2 for a clock period that corresponds to a half of the clock period required for a decoding device of a comparative example described with reference to FIG. 8. Thus, the time for decoding the coding block decreases.

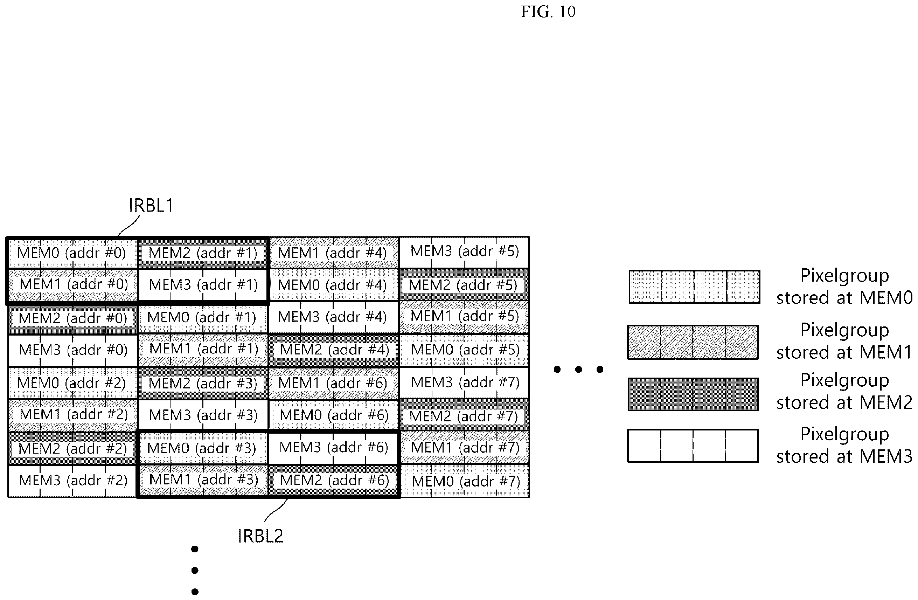

FIG. 10 illustrates a method of reading an IBC reference block from a current picture frame according to an embodiment of the present disclosure. FIG. 10 illustrates the reading of the IBC reference block with a pixel size of 8 by 2 (8×2).

The reading of the IBC reference block in the current picture frame described with reference to FIG. 10 is performed based on a current picture frame stored as in FIG. 7 by the decoding device 200 of FIG. 2. An operation of the decoding device 200 that reads the IBC reference block from the current picture frame will be described with reference to FIGS. 2 and 10. Detailed descriptions that are the same as or similar to those of FIGS. 2, 7, and 9 may be omitted or summarized.

Referring to FIG. 10, in an embodiment, the decoding device 200 generates prediction blocks that respectively correspond to coding blocks by referring to the IBC reference blocks IRBL1 and IRBL2 indicated by block vectors of the coding blocks currently being decoded in the decoded current picture frame.

The decoding device 200 reads the IBC reference blocks IRBL1 and IRBL2 from respective memory devices and generates the prediction blocks. Different from a current picture frame of FIG. 5, each of the IBC reference blocks IRBL1 and IRBL2 is stored at different memory devices in a current picture frame according to an embodiment of the present disclosure. For example, a first IBC reference block IRBL1 is stored at address #0 (addr #0) of the first memory device MEM0, address #1 (addr #1) of the third memory device MEM2, address #0 (addr #0) of the second memory device MEM1, and address #1 (addr #1) of the fourth memory device MEM3. In addition, a second IBC reference block IRBL2 is stored at address #3 (addr #3) of the first memory device MEM0, address #6 (addr #6) of the fourth memory device MEM3, address #3 (addr #3) of the second memory device MEM1, and address #6 (addr #6) of the third memory device MEM2. For example, each of the first IBC reference block IRBL1 and the second IBC reference block IRBL2, which have a pixel size of 8 by 2, is stored separately in four memory devices MEM0, MEM1, MEM2, and MEM3. Accordingly, the decoding device 200 reads each of the IBC reference blocks IRBL1 and IRBL2 with a single access to each of the different memory devices MEM0, MEM1, MEM2, and MEM3. Therefore, different from a decoding device of a comparative example described with reference to FIG. 8, the decoding device 200 according to an embodiment of the present disclosure reads the IBC reference blocks IRBL1 and IRBL2 for a clock period that corresponds to a half of the clock period required for a decoding device of a comparative example described with reference to FIG. 8. Thus, the time for decoding the coding block decreases.

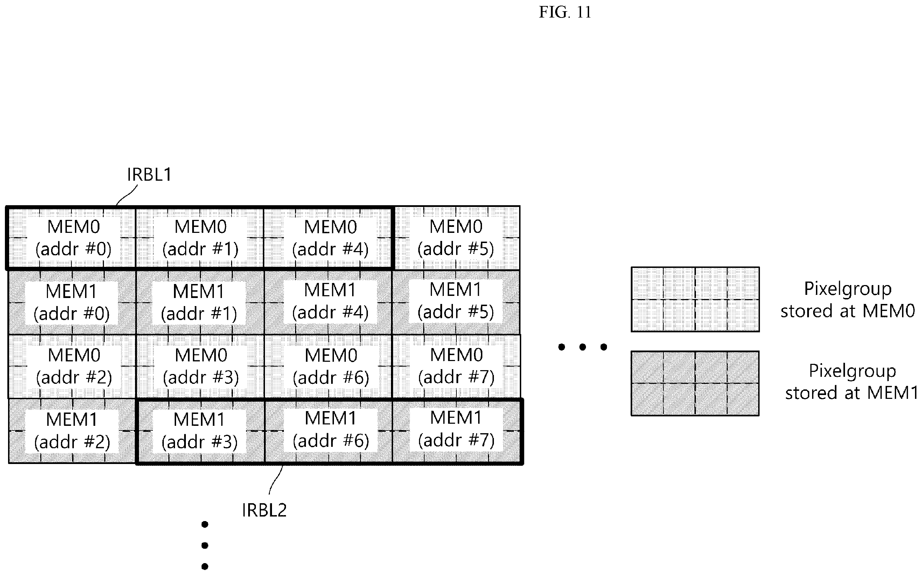

FIG. 11 illustrates a method of reading an IBC reference block from a current picture frame according to a comparative example. FIG. 11 illustrates the reading of the IBC reference block with a pixel size of 12 by 2 (12×2). Detailed descriptions that are the same as or similar to those of FIG. 8 may be omitted or summarized.

The reading of the IBC reference block in the current picture frame described with reference to FIG. 11 is performed based on the current picture frame stored as in FIG. 5 by the decoding device according to a comparative example.

Since each of the IBC reference blocks IRBL1 and IRBL2 of FIG. 11 has a pixel size of 12 by 2, each of the IBC reference blocks IRBL1 and IRBL2 is stored at different addresses of one memory device. For example, a first IBC reference block IRBL1 is stored at three addresses addr #0, addr #1, and addr #4 of a first memory device MEM0, and a second IBC reference block IRBL2 is stored at three addresses addr #3, addr #6, and addr #7 of a second memory device MEM1. Accordingly, the decoding device according to a comparative example is required to access one memory device three times to read each of the IBC reference blocks IRBL1 and IRBL2.

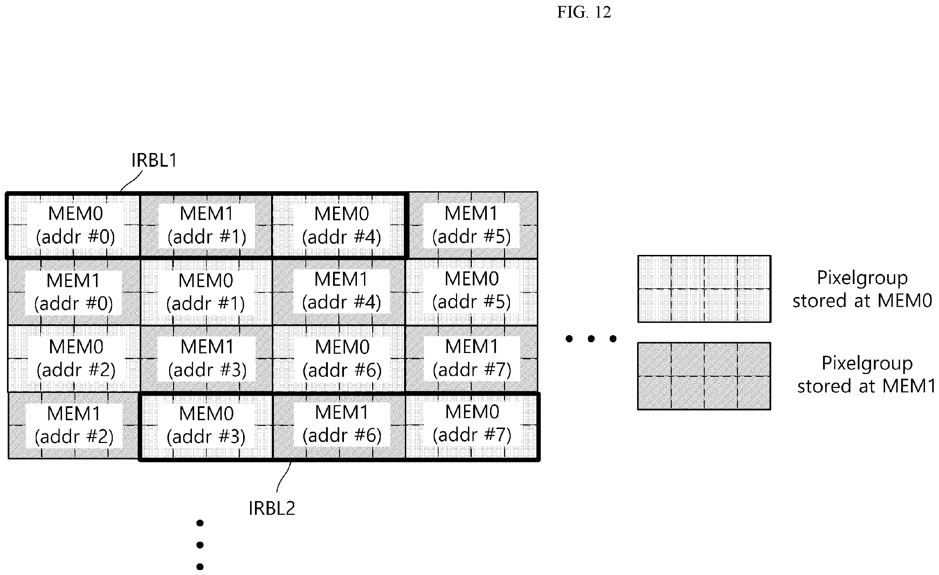

FIG. 12 illustrates a method of reading an IBC reference block from a current picture frame according to an embodiment of the present disclosure. FIG. 12 illustrates the reading of an IBC reference block with a pixel size of 12 by 2 (12×2).

The reading of an IBC reference block in a current picture frame described with reference to FIG. 12 is performed based on a current picture frame stored as in FIG. 6 by the decoding device 200 of FIG. 2. An operation of the decoding device 200 that reads the IBC reference block from a current picture frame will be described with reference to FIGS. 2 and 12. Detailed descriptions that are the same as or similar to those of FIGS. 2, 6, and 9 may be omitted or summarized.

Each of the IBC reference blocks IRBL1 and IRBL2 of FIG. 12 is stored at different addresses of different memory devices. For example, a first IBC reference block IRBL1 is stored at two addresses addr #0 and addr #4 of a first memory device MEM0 and one address addr #1 of a second memory device MEM1. In addition, a second IBC reference block IRBL2 is stored at two addresses addr #3 and addr #7 of the first memory device MEM0 and one address addr #6 of the second memory device MEM1. The different memory devices can be accessed for the same clock period of a clock signal. For example, the access to the address addr #6 of the second memory device MEM1 is substantially simultaneously performed with the access to one of the two addresses addr #3 and addr #7 of the first memory device MEM0. Accordingly, the decoding device 200 can read each of the IBC reference blocks IRBL1 and IRBL2, each having the pixel size of 12x2, with double accesses to one of the two different memory devices and a single access to the other of the two different memory devices. Therefore, each of the IBC reference blocks IRBL1 and IRBL2 can be read more quickly than those read by a decoding device according to a comparative example described with reference to FIG. 11. Thus, the time for decoding the coding block decreases.

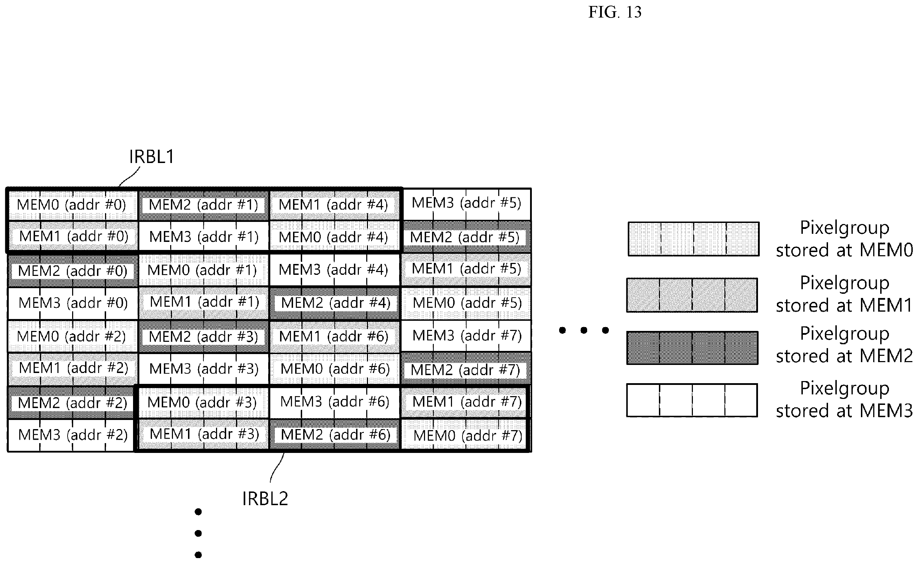

FIG. 13 illustrates a method of reading an IBC reference block from a current picture frame according to an embodiment of the present disclosure. FIG. 13 illustrates the reading of an IBC reference block with a pixel size of 12 by 2 (12×2).

The reading of the IBC reference block in a current picture frame described with reference to FIG. 13 is performed based on a current picture frame stored as in FIG. 7 by the decoding device 200 of FIG. 2. An operation of the decoding device 200 that reads the IBC reference block from a current picture frame will be described with reference to FIGS. 2 and 13. Detailed descriptions that are the same as or similar to those of FIGS. 2, 7, and 10 may be omitted or summarized.

Each of the IBC reference blocks IRBL1 and IRBL2 of FIG. 13 is stored at different addresses of different memory devices. For example, a first IBC reference block IRBL1 is stored at two addresses addr #0 and addr #4 of a first memory device MEM0, two addresses addr #0 and addr #4 of a second memory device MEM1, one address addr #1 of a third memory device MEM2, and one address addr #1 of a fourth memory device MEM3. In addition, a second IBC reference block IRBL2 is stored at two addresses addr #3 and addr #7 of the first memory device MEM0, two addresses addr #3 and addr #7 of the second memory device MEM1, one address addr #6 of the third memory device MEM2, and one address addr #6 of the fourth memory device MEM3. The different memory devices can be accessed for the same clock period of a clock signal. For example, the access to one address of the first memory device MEM0 can be substantially simultaneously performed with the access to the other memory devices MEM1, MEM2, and MEM3. Accordingly, the decoding device 200 can read each of the IBC reference blocks IRBL1 and IRBL2, each having the pixel size of 12x2, with double accesses to each of two memory devices and a single access to the other two memory devices. Therefore, each of the IBC reference blocks IRBL1 and IRBL2 can be read more quickly than those read by a decoding device according to a comparative example described with reference to FIG. 11. Thus, the time for decoding the coding block decreases.

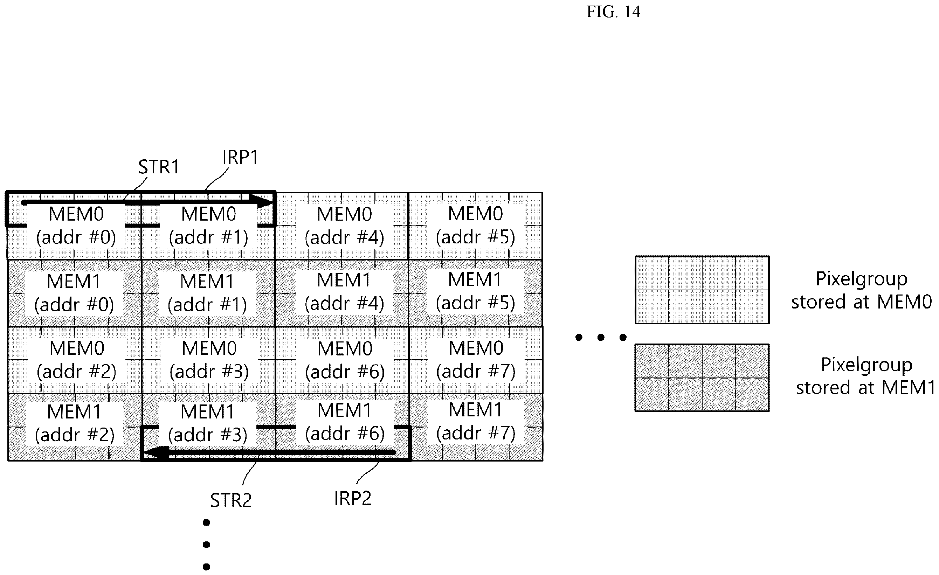

FIG. 14 illustrates a method of reading ISC reference pixels from a current picture frame according to a comparative example. FIG. 14 illustrates the reading of ISC reference pixels with a pixel size of 8 by 1 (8×1), which are indicated by sub-strings. Detailed descriptions that are the same as or similar to those of FIG. 8 may be omitted or summarized.

The reading of the ISC reference pixels in a current picture frame described with reference to FIG. 14 is performed based on a current picture frame stored as in FIG. 5 by a decoding device according to a comparative example.

FIG. 14 shows the sub-strings STR1 and STR2 in the form of sub-strings of a reference coding block, and the sub-strings STR1 and STR2 are not included in the current picture frame.

Since each of the ISC reference pixels IRP1 and IRP2 of FIG. 14 has a pixel size of 8 by 1 (8×1), each of the ISC reference pixels IRP1 and IRP2 is stored at different addresses of one memory device. For example, first ISC reference pixels IRP1 that correspond to a first sub-string STR1 are stored at two addresses addr #0 and addr #1 of a first memory device MEM0, and second ISC reference pixels IRP2 that correspond to a second sub-string STR2 are stored at two addresses addr #3 and addr #6 of a second memory device MEM1. Accordingly, a decoding device according to a comparative example is required to access one memory device two times to read each of the ISC reference pixels IRP1 and IRP2.

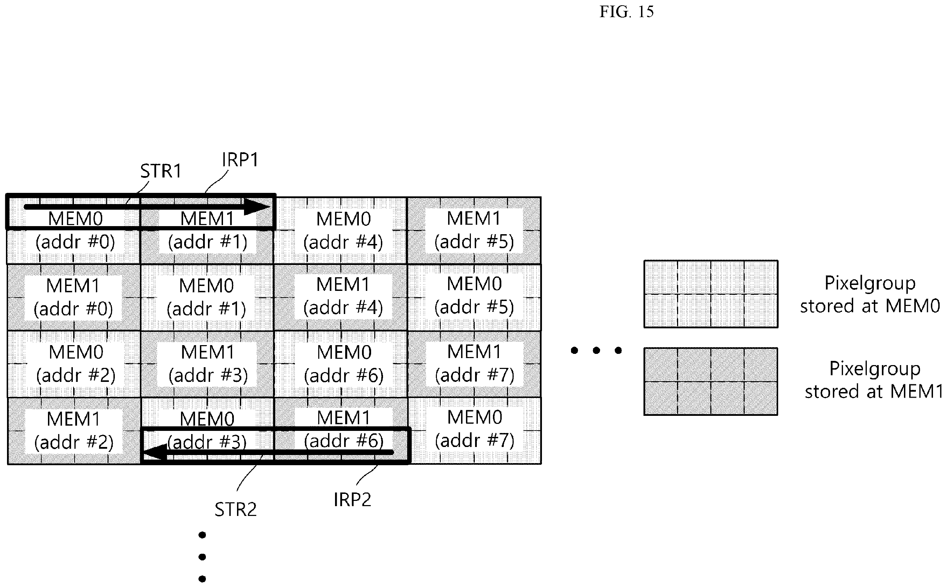

FIG. 15 illustrates a method of reading ISC reference pixels from a current picture frame according to an embodiment of the present disclosure. FIG. 15 illustrates the reading of the ISC reference pixels with a pixel size of 8 by 1 (8×1), which are indicated by sub-strings. Detailed descriptions that are the same as or similar to those of FIG. 9 may be omitted or summarized.

The reading of ISC reference pixels in a current picture frame described with reference to FIG. 15 can be performed based on a current picture frame stored as in FIG. 6 by the decoding device 200 of FIG. 2. An operation of the decoding device 200 that reads the ISC reference pixels in a current picture frame will be described with reference to FIGS. 2 and 15. Detailed descriptions that are the same as or similar to those of FIGS. 2, 6, and 9 may be omitted or summarized.

FIG. 15 shows the sub-strings STR1 and STR2 in the form of sub-strings of a reference coding block, and the sub-strings STR1 and STR2 are not included in a current picture frame.

Each of the ISC reference pixels IRP1 and IRP2 of FIG. 15 is stored at different addresses of different memory devices. For example, first ISC reference pixels IRP1 are stored at one address addr #0 of a first memory device MEM0 and one address addr #1 of a second memory device MEM1. In addition, second ISC reference pixels IRP2 are stored at one address addr #3 of the first memory device MEM0 and one address addr #6 of the second memory device MEM1. Accordingly, the decoding device 200 can read each of the ISC reference pixels IRP1 and IRP2, each having the pixel size of 8 by 1, with a single access to each of different memory devices MEM0 and MEM1. Therefore, each of the ISC reference pixels IRP1 and IRP2 can be read more quickly than those read by a decoding device according to a comparative example described with reference to FIG. 14. Thus, the time for decoding the coding block decreases.

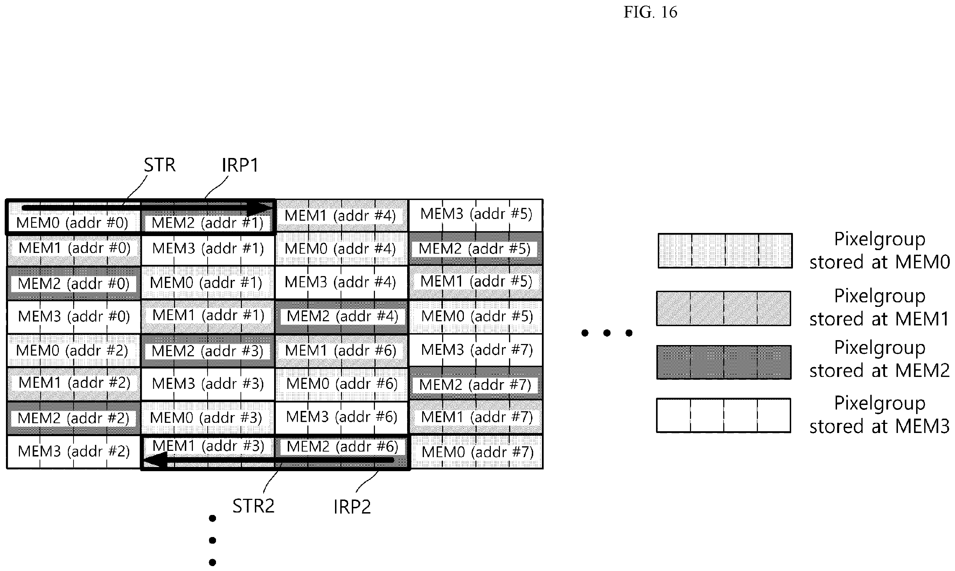

FIG. 16 illustrates a method of reading ISC reference pixels from a current picture frame according to an embodiment of the present disclosure. FIG. 16 illustrates the reading of the ISC reference pixels with a pixel size of 8 by 1 (8×1), which are indicated by sub-strings. Detailed descriptions that are the same as or similar to those of FIG. 10 may be omitted or summarized.

The reading of ISC reference pixels in a current picture frame described with reference to FIG. 16 is performed based on a current picture frame stored as in FIG. 7 by the decoding device 200 of FIG. 2. An operation of the decoding device 200 that reads the ISC reference pixels in a current picture frame will be described with reference to FIGS. 2 and 16. Detailed descriptions that are the same as or similar to those of FIGS. 2, 7, and 10 may be omitted or summarized.

FIG. 16 shows the sub-strings STR1 and STR2 in the form of sub-strings of a coding block, and the sub-strings STR1 and STR2 are not included in the current picture frame.

Each of the ISC reference pixels IRP1 and IRP2 of FIG. 16 is stored at different addresses of different memory devices. For example, first ISC reference pixels IRP1 are stored at one address addr #0 of a first memory device MEM0 and one address addr #1 of a third memory device MEM2. In addition, second ISC reference pixels IRP2 are stored at one address addr #3 of the second memory device MEM1 and one address addr #6 of the third memory device MEM2. Accordingly, the decoding device 200 can read each of the ISC reference pixels IRP1 and IRP2, each having the pixel size of 8 by 1, with a single access to each of different memory devices MEM0, MEM1 and MEM2. Therefore, each of the ISC reference pixels IRP1 and IRP2 can be read more quickly than those read by a decoding device according to a comparative example described with reference to FIG. 14. Thus, the time for decoding the coding block decreases.

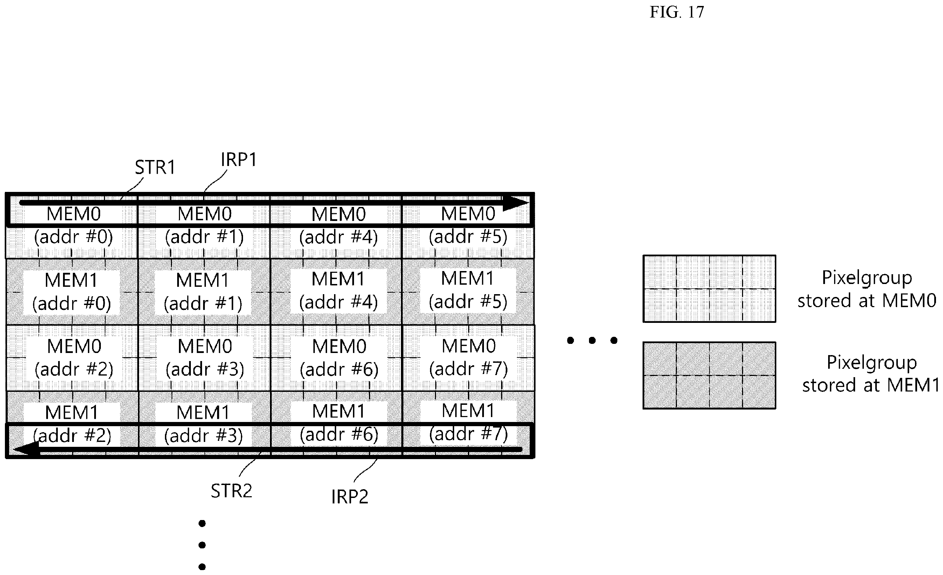

FIGS. 17 to 19 illustrate an operation of a decoding device according to an embodiment of the present disclosure that reads ISC reference pixels, each having a pixel size of 16 by 1 (16×1) and being indicated by a sub-string, and are described by being compared with a decoding device according to a comparative example. The decoding device according to an embodiment of the present disclosure correspond to the decoding device 200 of FIG. 2.

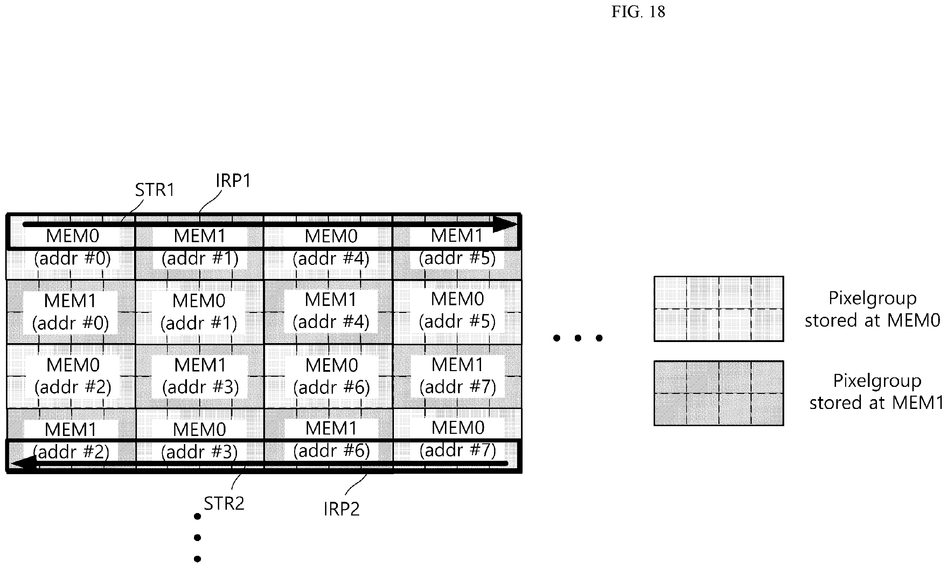

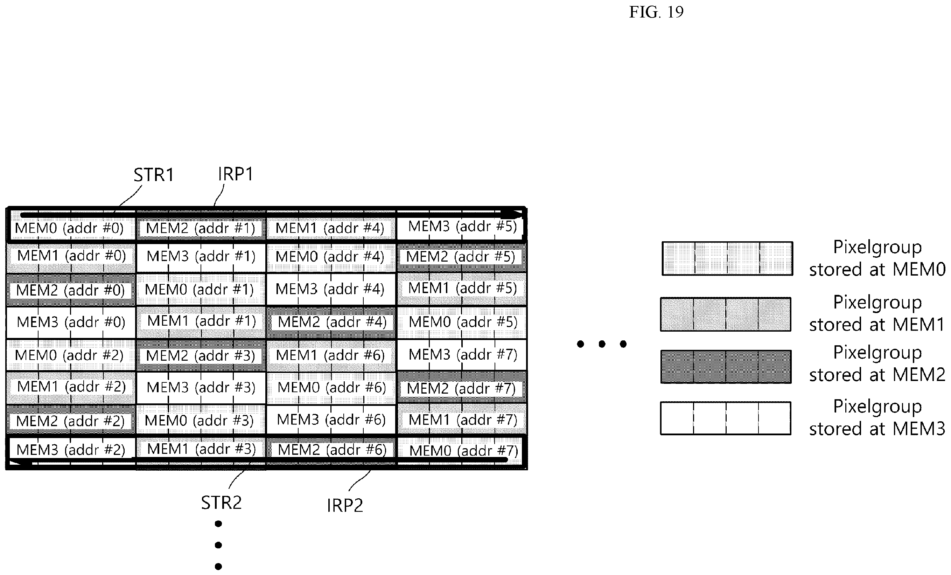

FIG. 17 illustrates the reading of ISC reference pixels from a current picture frame according to a comparative example of FIG. 5, FIG. 18 illustrates the reading of ISC reference pixels from a current picture frame of FIG. 6 by the decoding device 200, and FIG. 19 illustrates the reading of ISC reference pixels from a current picture frame of FIG. 7 by the decoding device 200.

Referring to FIG. 17, a decoding device according to a comparative example is required to access each of the memory devices MEM0 and MEM1 four times to read each of the ISC reference pixels IRP1 and IRP2, each having a pixel size of 16 by 1 (16×1) that correspond to sub-strings STR1 and STR2.

Referring to FIG. 18, the decoding device 200 according to an embodiment of the present disclosure accesses each of memory devices MEM0 and MEM1 twice to read each of the ISC reference pixels IRP1 and IRP2 that each have a pixel size of 16 by 1 (16×1).

Referring to FIG. 19, the decoding device 200 according to an embodiment of the present disclosure accesses each of memory devices MEM0, MEM1, MEM2, and MEM3 once to read each of the ISC reference pixels IRP1 and IRP2 that each have a pixel size of 16 by 1 (16×1).

Accordingly, the decoding device 200 according to an embodiment of the present disclosure can read each of the ISC reference pixels IRP1 and IRP2 more quickly than a decoding device according to a comparative example. Thus, the time for decoding a coding block decreases.

In the embodiments described with reference to FIGS. 15, 16, 18, and 19, the ISC reference pixels that correspond to the sub-strings correspond to only one row of the current picture frame and do not traverse multiple rows. However, similar to embodiments described with reference to FIGS. 15, 16, 18, and 19, even when the ISC reference pixels traverse multiple rows of a current picture frame, the decoding for a coding unit encoded in an ISC mode can be performed more quickly than by a decoding device according to a comparative example.

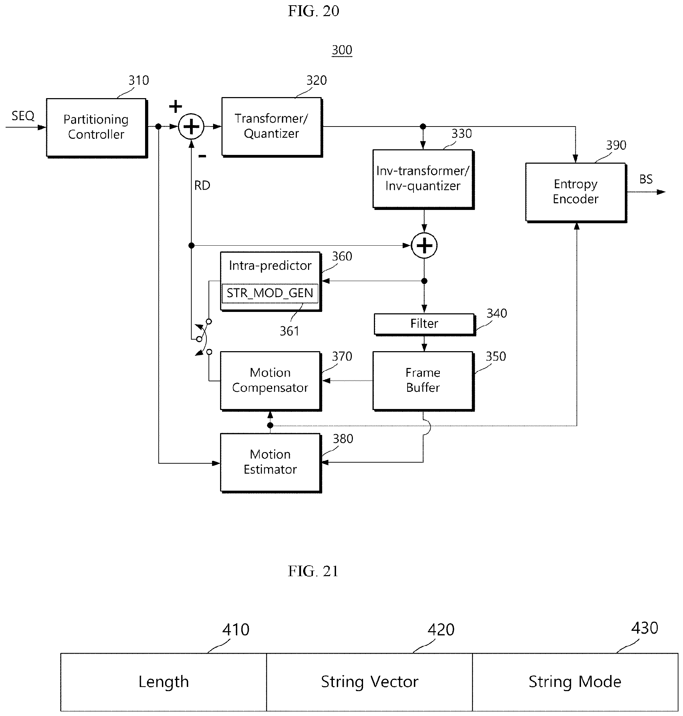

FIG. 20 shows an encoding device 300 according to an embodiment of the present disclosure. The encoding device 300 described with reference to FIG. 20 corresponds to the video data encoding device 111 of the source device 110 of FIG. 1.

Referring to FIG. 20, in an embodiment, the encoding device 300 is an electronic circuit that encodes a video sequence based on a video compression method such as one of AVC, VP8, VP9, HEVC, AV1, AVS3, etc. The encoding device 300 encodes a coding block based on an intra prediction mode. According to embodiments, the encoding device 300 encodes the coding block based on an intra string mode or an intra block mode. When the encoding device 300 encodes the coding block based on intra string mode, the coding block is encoded in a bitstream that includes at least one sub-string.

The encoding device 300 includes a partitioning controller 310, a transformer/quantizer 320, an inverse-transformer/inverse-quantizer 330, a filter 340, a frame buffer 350, an intra predictor 360, a motion compensator 370, a motion estimator 380, and an entropy encoder 390. The encoding device 300 may further include other general-purpose components in addition to the components illustrated in FIG. 20.

The partitioning controller 310 receives a video sequence SEQ. The video sequence SEQ includes data that is referenced to display an image or a video on a display device. The partitioning controller 310 partitions the video sequence SEQ to generate conversion unit data that includes residual data and prediction unit data to be referenced for intra prediction and/or motion compensation.

The transformer/quantizer 320 receives the residual data. The residual data corresponds to differences between an output from the partitioning controller 310 and an output from one of the intra predictor 360 or the motion compensator 370. The transformer/quantizer 320 converts and quantizes the residual data and generates converted data. The inverse-transformer/inverse-quantizer 330 inversely converts and quantizes the converted data to reconstruct (restore) the residual data.

The filter 340 receives a sum of the output from one of the intra predictor 360 or the motion compensator 370 and the restored residual data and performs filtering such as noise removal on the summed result. The filter 340 performs one of the filtering methods of the filtering unit 230 described with reference to FIG. 2, however, embodiments are not necessarily limited thereto.

The frame buffer 350 buffers a previous picture frame of the video sequence SEQ. For example, the frame buffer 350 may be implemented by a buffer memory and/or a nonvolatile memory.

The intra predictor 360 receives a sum of the output from one of the intra predictor 360 or the motion compensator 370 and the restored residual data. The intra predictor 360 obtains a prediction block of an IBC method with respect to the coding block using the reference block adjacent to the coding block of a current picture frame of the video sequence SEQ. According to an embodiment, the intra predictor 360 obtains prediction pixels of an ISC method with respect to a coding block using the reference pixels adjacent to the coding block. The intra predictor 360 generates a block vector with respect to the prediction block and a string vector with respect to the prediction pixels, and information about the generated block vector and the generated string vector is included in the bitstream BS.

The motion estimator 380 performs inter prediction between the current picture frame and the previous picture frame. The motion estimator 380 generates motion vectors that correspond to the coding blocks of the current picture frame.

The motion compensator 370 obtains the prediction block detected by the inter prediction. One of the prediction blocks obtained by the intra prediction, the prediction pixels, or the prediction block obtained by the inter prediction is used by the transformer/quantizer 320 and the filter 340.

The motion vectors generated by the motion estimator 380 and the residual data generated by the transformer/quantizer 320 are transmitted to the entropy encoder 390. The entropy encoder 390 generates the encoded data as the bitstream BS based on one of the motion vectors, the block vectors, or the string vectors and the residual data. According to embodiments, the ISC mode encoding operation may be performed using the residual data or may be performed based only on the ISC reference pixels without using the residual data.

The intra predictor 360 according to an embodiment of the present disclosure includes a string mode information generator 361 that generates sub-string mode information that corresponds to the type of the sub-string in the ISC encoding. The sub-string mode information is about a shape of the sub-string. The generated sub-string mode information is included in the bitstream BS along with the string vector information. For example, referring to FIG. 21, in an embodiment, the sub-string of the coding block encoded in the ISC method includes a length 410 of the sub-string, the string vector 420, and the sub-string mode information 430 as syntax elements.

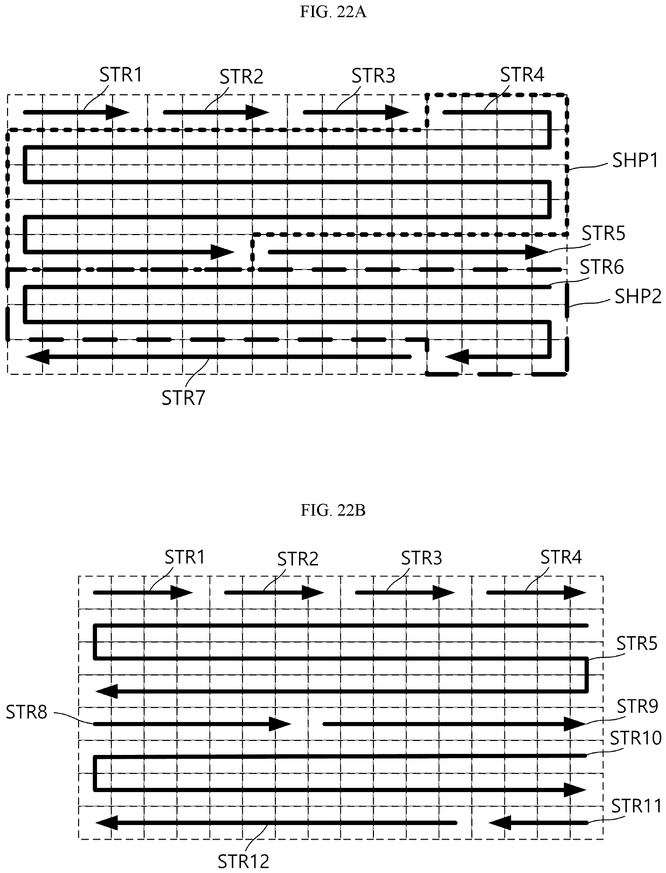

FIG. 22A is a block diagram of an ISC encoding of a coding unit according to a comparative example. FIG. 22B is a block diagram of an ISC encoding of a coding unit according to an embodiment of the present disclosure. The ISC encoding encodes a coding block by an ISC method (ISC mode). An encoding device of FIG. 22B corresponds to the encoding device 300 of FIG. 20.

Referring to FIG. 22A, an encoding device according to a comparative example encodes the coding block into seven sub-strings, such as first, second, third, fourth, fifth, sixth, and seventh sub-strings STR1, STR2, STR3, STR4, STR5, STR6, and STR7 based on the ISC method. The first sub-string STR1, the second sub-string STR2, the third sub-string STR3, the fifth sub-string STR5, and the seventh sub-string STR7 do not extend across plural rows and are located on one row. The fourth sub-string STR4 and the sixth sub-string STR6 extend across plural rows.

Referring to FIG. 22B, the encoding device 300 according to an embodiment of the present disclosure partitions a video sequence SEQ to allow pixels of a sub-string or ISC reference pixels that correspond to the sub-string to form a rectangular shape in the ISC encoding method. For example, sub-strings that correspond to the first sub-string STR1, the second sub-string STR2, the third sub-string STR3, the fifth sub-string STR5, and the seventh sub-string STR7 of FIG. 22A do not extend across plural rows, and pixels in the sub-strings STR1 to STR11 of FIG. 22B have a rectangular shape. Accordingly, the encoding device 300 maintains the first sub-string STR1, the second sub-string STR2, the third sub-string STR3, the fifth sub-string STR5, and the seventh sub-string STR7. On the other hand, a shape SHP1 of the fourth sub-string STR4 and a shape SHP2 of the sixth sub-string STR6 have a polygonal shape rather than the rectangular shape. Therefore, the encoding device 300 further partitions the fourth sub-string STR4 and the sixth sub-string STR6 of FIG. 22A. For example, the encoding device 300 partitions the fourth sub-string STR4 of FIG. 22A into a fourth sub-string STR4 and a fifth sub-string STR5 of FIG. 22B. In addition, the encoding device 300 partitions the sixth sub-string STR6 of FIG. 22A into a tenth sub-string STR10 and an eleventh sub-string STR11 of FIG. 22B. The encoding device 300 searches for the ISC reference pixels with respect to the changed sub-strings and changes syntax elements such as a string vector.

To change the shape of the sub-string into a rectangular shape when a first pixel of the sub-string is located at an intermediate position of one row of the coding unit, the encoding device 300 encodes the video sequence to the sub-string to allow the last pixel of the sub-string to be located at the same row as the first pixel. For example, referring to FIG. 22A, since a first pixel of the fourth sub-string STR4 is located at an intermediate position of one row of the coding unit, the fourth sub-string STR4 of FIG. 22A is partitioned to allow the last pixel of the fourth sub-string STR4 to be located at the same row as the first pixel of the fourth sub-string STR4 of FIG. 22B.

To change the shape of the sub-string into a rectangular shape when a first pixel of the sub-string corresponds to a first pixel or the last pixel of one row of the coding unit, the encoding device 300 encodes the video sequence of the sub-string to allow the last pixel of the sub-string to be located at the same row as the row at which the first pixel is located, or to be the last pixel of another row different from the row of the first pixel For example, referring to FIG. 22A, since a first pixel of the sixth sub-string STR6 corresponds to the last pixel of a sixth row of the coding unit, the sixth sub-string STR6 of FIG. 22A is partitioned to allow the last pixel of a seventh row to be the last pixel of the tenth sub-string STR10 of FIG. 22B.

Since the encoding device 300 changes the shape of the sub-strings into a rectangular shape and includes the sub-string mode information about the shape of the sub-string in the bitstream, the decoding device can quickly determine the memory device where the pixels that correspond to the sub-string are stored based on the sub-string mode information.

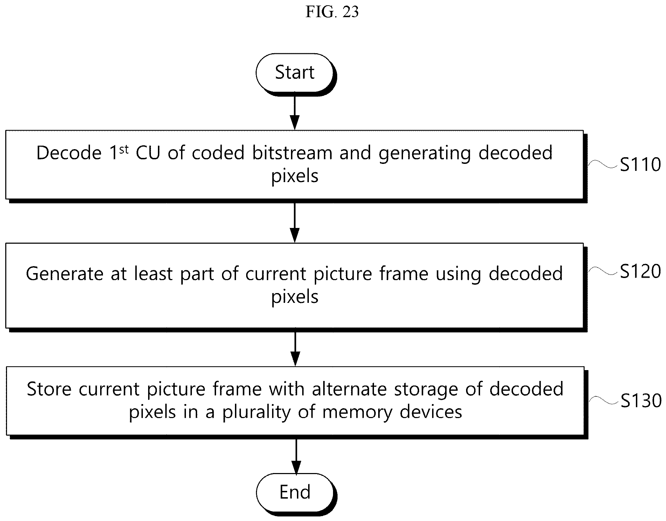

FIG. 23 is a flowchart of a decoding method of a video signal processing device according to an embodiment of the present disclosure. The video signal processing device corresponds to the sink device 120 of FIG. 1 or the decoding device 200 of FIG. 2. At least a portion of the operations of the sink device 120 or the decoding device 200 described with reference to FIGS. 1 to 22B can be used in a decoding method according to an embodiment of FIG. 23.

In operation S110, the decoding device 200 decodes a first coding unit of a bitstream in which the video sequence is encoded and generates the decoded pixels. The decoded pixels are obtained by reconstructing the coding unit based on the inter prediction data ITPD received from the inter predictor 240 of FIG. 2 or the intra prediction data IRPD received from the intra predictor 270 of FIG. 2.

In operation S120, the decoding device 200 generates at least part of a current picture frame using the decoded pixels. For example, the decoding device 200 transmits the reconstructed pixel data RPD to the inter buffer memory controller 250 that controls the current picture buffer memory 290 in which the current picture frame of FIG. 2 is stored and generate at least the part of the current picture frame.

In operation S130, the decoding device 200 stores the current picture frame in the current picture buffer memory 290 that includes the plural memory devices. For example, the decoding device 200 alternately stores the decoded pixels of the current picture frame for every certain number of pixels along the row and the column in different memory devices. For example, the decoding device 200 alternately stores the decoded pixels to have a shape of a current picture frame as in FIG. 6 or 7 in the plural memory devices in a checkerboard pattern

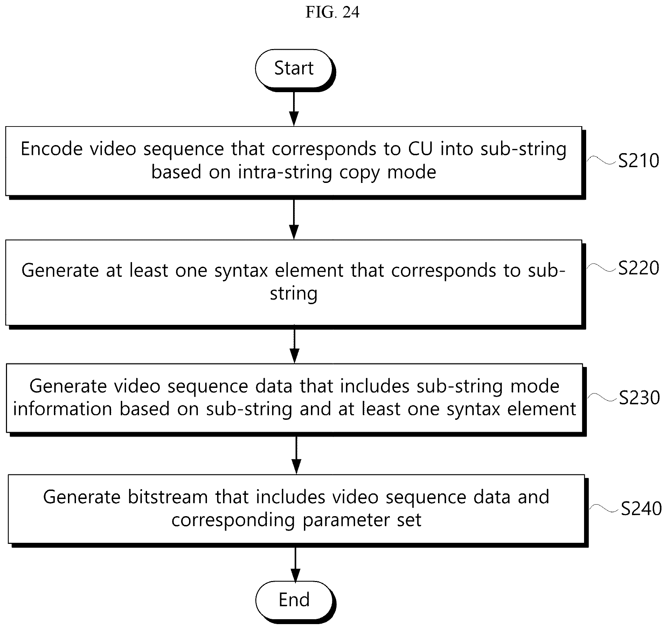

FIG. 24 is a flowchart of an encoding method of a video signal processing device according to an embodiment of the present disclosure. The video signal processing device corresponds to the source device 110 of FIG. 1 or the encoding device 300 of FIG. 20. At least a portion of the operations of the source device 110 or the encoding device 300 described with reference to FIGS. 1 to 22B can be used in a encoding method according to an embodiment of FIG. 24.

In operation S210, the encoding device 300 encodes a video sequence that corresponds to a coding unit of a picture into a sub-string based on the ISC mode. For example, the residual data that corresponds to differences between the output of the partitioning controller 310 of FIG. 20 and the output of one of the intra predictor 360 or the motion compensator 370 is transformed and quantized, and the residual data is encoded into the sub-string based on the string vectors. According to an embodiment, partitioned data is encoded into the sub-string based on the string vector of the output of the partitioning controller 310 and the output of the intra predictor 360.

In operation S220, the encoding device 300 generates at least one syntax element that corresponds to the video sequence. For example, syntax elements are generated about the length of the sub-string and the string vector. A syntax element about the sub-string mode information that corresponds to the shape of the sub-string is also generated.

In operation S230, the encoding device 300 generates video sequence data based on the sub-string and at least one syntax element. For example, video sequence data is generated that includes the sub-string and at least one syntax element.

In operation S240, the encoding device 300 generates the video sequence data as the bitstream BS. The bitstream BS includes at least one sub-string.

While embodiments of the present disclosure have been described with reference to the accompanying drawings, it will be apparent to those of ordinary skill in the art that various changes and modifications can be made thereto without departing from the scope of the present disclosure as set forth in the following claims.

## Claims

1. A video signal processing method of a video signal processing device (123, 200), comprising:
decoding (S110) a first coding unit of a bitstream in which a video sequence is encoded and generating decoded pixels;
generating (S120) at least a part of a current picture frame using the decoded pixels; and
storing (S130) the current picture frame in a current picture buffer memory (124, 290) that includes a plurality of memory devices (124_1, 124_2, 291, 293, MEM0-MEM3),
wherein storing the current picture frame in the current picture buffer memory (290) includes alternately storing the decoded pixels for every certain number of pixels along a row and a column of the current picture frame in different memory devices of the plurality of memory devices (124_1, 124_2, 291, 293, MEM0-MEM3) as a part of the current picture frame.

2. The video signal processing method of claim 1, further comprising reading at least some pixels located at a same row of the current picture frame from the memory devices for a same clock period of a clock signal.

3. The video signal processing method of claim 1 or 2, wherein each row of the current picture frame includes pixels stored in different memory devices, and each column of the current picture frame includes pixels stored in different memory devices.

4. The video signal processing method of any one of claims 1 to 3, wherein storing the current picture frame in the current picture buffer memory (290) comprises:
storing a first pixel group of a plurality of pixel groups in a first memory device of the plurality of memory devices (124_1, 124_2, 291, 293, MEM0-MEM3) in the current picture frame; and
storing pixel groups located at top, bottom, left, and right sides adjacent to the first pixel group in other memory devices of the plurality of memory devices (124_1, 124_2, 291, 293, MEM0-MEM3) in the current picture frame,
wherein the current picture frame includes pixel groups that include M×N pixels,
wherein M and the N are each integer numbers equal to or greater than 1.

5. The video signal processing method of claim 4, further comprising storing each of the pixel groups at different addresses of each of the memory devices (124_1, 124_2, 291, 293, MEM0-MEM3).

6. The video signal processing method of any one of claims 1 to 5, further comprising:
obtaining information about a prediction mode of a second coding unit from the bitstream, wherein the prediction mode is one of an intra string mode or an intra block mode; and
decoding the second coding unit based on the current picture frame and the prediction mode.

7. The video signal processing method of claim 6, further comprising, when the prediction mode of the second coding unit is an intra string mode:
obtaining, from the bitstream, a first string vector and a first string length of a first sub-string of a plurality of sub-strings of the second coding unit;
reading first pixels of the current picture frame that corresponds to the first string length from a position indicated by the first string vector in the current picture frame; and
decoding the first sub-string based on the first pixels, wherein at least a part of the first pixels are located on a same row of the current picture frame and are read from different memory devices of the plurality of memory devices (124_1, 124_2, 291, 293, MEM0-MEM3).

8. The video signal processing method of claim 7, further comprising reading at least some of the first pixels from different memory devices for a same clock period of a clock signal.

9. The video signal processing method of claim 6, further comprising, when the prediction mode of the second coding unit is an intra block mode:
obtaining, from the bitstream, a first block vector and a first block size of a first block of a plurality of blocks of the second coding unit;
reading second pixels of the current picture frame that correspond to the first block size from a position indicated by the first block vector in the current picture frame;
reading at least a part of the second pixels from a third pixel group and a fourth pixel group, which are located adjacent to each other along a row of the current picture frame, of a plurality of pixel groups of the current picture frame; and
decoding the first block based on the second pixels,
wherein the third pixel group and the fourth pixel group are stored in different memory devices of the plurality of memory devices (124_1, 124_2, 291, 293, MEM0-MEM3).

10. A video signal processing device, comprising:
a bitstream processing logic (210) that is configured to decode a bitstream, in which video data is encoded, and to generate residual data;
a reconstructor (220) that is configured to generate pixel data reconstructed based on the residual data and intra prediction data;
an intra predictor (270) that is configured to generate the intra prediction data based on a current picture frame; and
a memory controller (280) that is configured to store the current picture frame in a current picture buffer memory (124, 290) that includes a plurality of memory devices (124_1, 124_2, 291, 293, MEM0-MEM3) based on the reconstructed pixel data,
wherein the memory controller (280) is configured to alternately store decoded pixels for every certain number of pixels along a row and a column of the current picture frame in different memory devices of the plurality of memory devices (124_1, 124_2, 291, 293, MEMO-MEM3) as a part of the current picture frame.

11. The video signal processing device of claim 10, wherein the plurality of memory devices (124_1, 124_2, 291, 293, MEM0-MEM3) comprise a plurality of on-chip memory devices.

12. The video signal processing device of claim 10 or 11, wherein the memory controller is configured to read at least some pixels located at a same row of the current picture frame from the memory devices for a same clock period of a clock signal.

13. The video signal processing device of any one of claims 10 to 12, wherein the memory controller is configured to:
store a first pixel group of a plurality of pixel groups in a first memory device of the plurality of memory devices (124_1, 124_2, 291, 293, MEM0-MEM3) in the current picture frame, and
store pixel groups located at top, bottom, left, and right sides adjacent to the first pixel group in other memory devices of the plurality of memory devices (124_1, 124_2, 291, 293, MEM0-MEM3) in the current picture frame,
wherein the current picture frame includes the pixel groups that include M×N pixels,
wherein M and the N are each an integer number equal to or greater than 1.

14. The video signal processing device of claim 13, wherein the memory controller is configured to:
read intra reference pixels indicated by a string vector of a sub-string of a coding unit that corresponds to the bitstream encoded in an intra string mode, and
read pixels of a same row of the current picture frame of the intra reference pixels from different memory devices of the plurality of memory devices (124_1, 124_2, 291, 293, MEMO-MEM3).

15. The video signal processing device of claim 13, wherein the memory controller is configured to read intra reference pixels indicated by a block vector of a coding block of a coding unit that corresponds to the bitstream encoded in an intra block mode,
wherein the intra reference pixels comprise a first pixel group and a second pixel group that are located adjacent to each other along a row of the current picture frame, and wherein the first and second pixel groups are stored in different memory devices of the plurality of memory devices (124_1, 124_2, 291, 293, MEM0-MEM3).
